# EUROPEAN PATENT APPLICATION

(11) **EP 4 807 602 A1**
(43) Date of publication of application: **16.09.2026**
(21) Application number: 26150630.7
(22) Date of filing: 07.01.2026
(51) Int. Cl.: G06F 21/57, H04L 9/40

(54) **CONTEXT AWARE VULNERABILITY PRIORITIZATION SYSTEM USING SOFTWARE BILL OF MATERIALS (SBOMS)**

(30) Priority: 10.03.2025 US 202519075604
(71) Applicant: Hitachi, Ltd., Tokyo 100-8280 (JP)
(72) Inventor: UCHIYAMA, Hiroki, Tokyo, 100-8280 (JP); RAJULAPATI, Parashuram Shourya, Tokyo, 100-8280 (JP); KAWAGUCHI, Nobutaka, Tokyo, 100-8280 (JP)
(74) Representative: Mewburn Ellis LLP

(57) **Abstract**

Systems and methods described herein provide context-aware vulnerability prioritization using Software Bill of Materials (SBOM) data and real-time contextual information from IoT and OT devices. Upon validating SBOM data, the system gathers contextual data, including environmental and device-specific information, and verifies its integrity. The data is standardized and common vulnerability exposure data is used to match vulnerabilities in the SBOM. Severity metrics are applied and combined with contextual data to assess overall risk. Based on the risk, risk scores that indicate vulnerability severity are assigned and each risk is prioritized accordingly. The prioritized data is then categorized into levels, distinguishing between purely contextual, device-specific, or combined data. According to the level of prioritization, a real-time alert is provided for context-aware vulnerability management, enabling immediate threat response.

## Description

### BACKGROUND

### Field

The present disclosure is generally directed to vulnerability management, and more specifically, to systems and methods for context-aware vulnerability prioritization using SBOM data and real-time contextual information from Internet of Things (IoT) and operational technology (OT) devices.

### Related Art

Organizations often maintain complex ecosystems of software and hardware assets, which may include various applications, devices, and systems. For instance, in environments such as manufacturing plants, a range of IoT and OT devices often interact with software systems to manage operations and enhance efficiency. As organizations increasingly rely on interconnected devices and software, maintaining visibility and security across all assets becomes critical. A common approach to managing software security involves using an SBOM, which provides a detailed inventory of software components, their dependencies, and known vulnerabilities. However, traditional vulnerability management systems typically lack the ability to effectively prioritize vulnerabilities based on each asset's operational context. Moreover, the operational context, such as environmental factors, device configurations, and real-time sensor data, is often not fully considered in vulnerability assessments, resulting in less accurate vulnerability responses.

In conventional software-oriented approaches use generalized risk weights, which oftentimes are manually assigned, to assess vulnerabilities across different computing assets. While being effective in traditional IT settings, these methods are ill-equipped for OT/loT environments where each device may operate under unique conditions with varying levels of criticality. In addition, risk mitigation techniques reliant on detailed software component analysis and potential patching are not feasible for OT/IoT devices due to limited computing resources and extensive operational strain imposed by inevitable, frequent updates.

As discussed in greater detail below, context-aware vulnerability prioritization systems and method disclosed in this patent document address these challenges by using a contextual analysis module that integrates SBOM data with real-time contextual information from various IoT/OT devices. Data from various sources is aggregated and operational context, which includes external or indirect environmental factors associated with an OT/IoT device, device-generated data, and detailed SBOM information are analyzed and precise risk scores are assigned, ensuring that vulnerability prioritization aligns with the unique operational context of each OT/IoT device. Finally, prioritized vulnerability alerts and recommendations are generated to enable users to respond to threats more effectively and allocate resources efficiently.

### SUMMARY

In some aspects of the disclosure, a method for context-aware vulnerability prioritization using SBOM data and real-time contextual information from IoT or OT devices comprises: in response determining that SBOM data is valid, performing steps including: obtaining from a plurality of sources contextual data, which may be updated in predetermined time intervals and includes environmental data and device data; and verifying an integrity of the contextual data; standardizing the contextual data into a standardized format; using common vulnerability exposure (CVE) data from a CVE database and the SBOM data to determine a vulnerability matching; applying metrics to obtain severity information; combing the severity information with at least some of the contextual data to obtain combined data; determining an overall risk associated with the combined data; based on the overall risk, assigning risk scores to vulnerabilities, each risk score indicating a severity of vulnerability; assigning priorities to risks associated with each risk score to obtain prioritized data; in response to determining that the prioritized data is at least one of purely contextual data, purely device data, or a data combination thereof, outputting a level from a plurality of levels, which may include includes Contextual Sensor Insight (CSI), Unified Data Fusion (UDF), or Targeted Device Intelligence (TDI); and based on the level, providing in real-time a context-aware vulnerability alert to initiate a threat response.

In some aspects, the device data may comprise operational data from a set of IoT devices or a set of OT devices, the metrics may comprise a CVSS metric, and or more of the steps may be performed iteratively.

In some aspects, the standardized format may be MQTT, CoAP, OPC UA, or MODBUS.

In some aspects, may further comprise analyzing the operational data from IoT/OT devices to determine a device configuration or environmental factor, and using the SBOM data to update a SBOM database.

In some aspects, determining that SBOM data is valid may comprise, in response to the integrity of the contextual data not being met, triggering an error handling process, e.g., in response to determining that a format of the SBOM data is incorrect.

In some aspects, the techniques described herein relate to a non-transitory computer-readable medium for storing instructions for executing a process, the instructions comprising: in response determining that SBOM data is valid, performing steps including: obtaining from a plurality of sources contextual data that includes environmental data and device data; and verifying an integrity of the contextual data, standardizing the contextual data into a standardized format; using CVE data from a CVE database and the SBOM data to determine a vulnerability matching; applying metrics to obtain severity information; combing the severity information with at least some of the contextual data to obtain combined data; determining an overall risk associated with the combined data; based on the overall risk, assigning risk scores to vulnerabilities, each risk score indicating a severity of vulnerability; assigning priorities to risks associated with each risk score to obtain prioritized data; in response to determining that the prioritized data is at least one of purely contextual data, purely device data, or a data combination thereof, outputting a level from a plurality of levels; and based on the level, providing in real-time a context-aware vulnerability alert to initiate a threat response.

In some aspects, the techniques described herein relate to an apparatus, comprising: a processor, configured to perform steps including: in response determining that SBOM data is valid, obtaining from a plurality of sources contextual data that includes environmental data and device data; and verifying an integrity of the contextual data, standardizing the contextual data into a standardized format; using CVE data from a CVE database and the SBOM data to determine a vulnerability matching; applying metrics to obtain severity information; combing the severity information with at least some of the contextual data to obtain combined data; determining an overall risk associated with the combined data; based on the overall risk, assigning risk scores to vulnerabilities, each risk score indicating a severity of vulnerability; assigning priorities to risks associated with each risk score to obtain prioritized data; in response to determining that the prioritized data is at least one of purely contextual data, purely device data, or a data combination thereof, outputting a level from a plurality of levels; and based on the level, providing in real-time a context-aware vulnerability alert to initiate a threat response.

Aspects of the present disclosure can involve a system, which can involve means for obtaining from a plurality of sources contextual data that comprises environmental data and device data and verifying an integrity of the contextual data, e.g., in response determining that SBOM data is valid; means for standardizing the contextual data into a standardized format; means for using CVE data from a CVE database and the SBOM data to determine a vulnerability matching; means for applying metrics to obtain severity information; means for combing the severity information with at least some of the contextual data to obtain combined data; means for determining an overall risk associated with the combined data; based on the overall risk, assigning risk scores to vulnerabilities, each risk score indicating a severity of vulnerability; means for assigning priorities to risks associated with each risk score to obtain prioritized data; means for in response to determining that the prioritized data is at least one of purely contextual data, purely device data, or a data combination thereof, outputting a level from a plurality of levels; and means for providing, based on the level and in real-time, a context-aware vulnerability alert, e.g., to initiate a threat response.

### BRIEF DESCRIPTION OF DRAWINGS

FIG. 1A and FIG. 1B illustrate a conventional vulnerability prioritization systems.
FIG. 2 illustrates a generalized context-aware vulnerability prioritization system, according to various embodiments of the present disclosure.
FIG. 3 illustrates is a more detailed context-aware vulnerability prioritization system, according to various embodiments of the present disclosure.
FIG. 4A and FIG. 4B illustrate exemplary inputs and outputs of the context-aware vulnerability prioritization system shown in FIG. 2.
FIG. 5A and FIG. 5B illustrate an exemplary data flow in the context-aware vulnerability prioritization system shown in FIG. 3.
FIG. 6 is a flowchart illustrating the processing of SBOM data by a data processing module according to various embodiments of the present disclosure.
FIG. 7 is a flowchart illustrating a process for device data collection, according to various embodiments of the present disclosure.
FIG. 8 is a flowchart illustrating a contextual analysis process, according to various embodiments of the present disclosure.
FIG. 9 is a flowchart illustrating a process for output categorization, according to various embodiments of the present disclosure.
FIG. 10 is a flowchart illustrating an exemplary process for context-aware vulnerability prioritization using SBOM data and real-time contextual information from IoT or OT devices, according to various embodiments of the present disclosure.
FIG. 11 illustrates an example computing environment according to various embodiments of the present disclosure.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

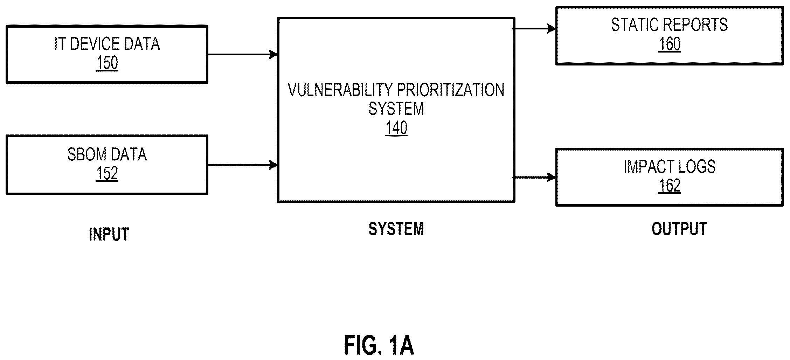

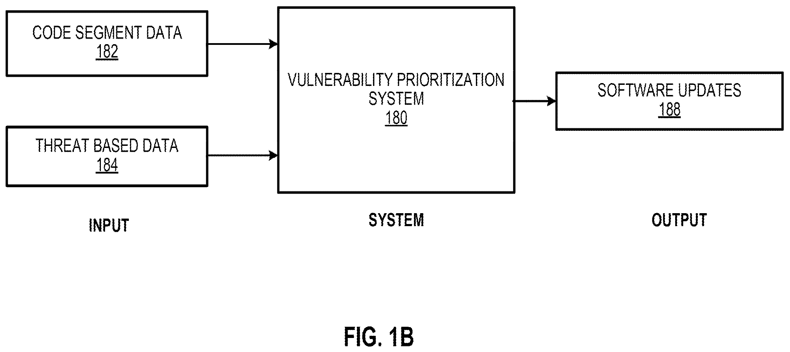

FIG. 1A illustrates a traditional vulnerability prioritization system. As depicted, vulnerability prioritization system 140 receives readily available IT device data 150 and SBOM data 152 to generate static reports 160 and impact logs 162. These systems typically apply generalized risk weights across various assets, resulting in vulnerability assessments that lack specificity and operational context. Similarly, the conventional vulnerability prioritization system 180 shown in FIG. 1B receives code segment data 182 and threat-based information 184, assesses vulnerabilities across different computing assets, and generates software updates 188 and produces outputs such as vulnerability logs (not shown). However, such systems do not incorporate real-time context, leading to limited effectiveness in dynamic environments.

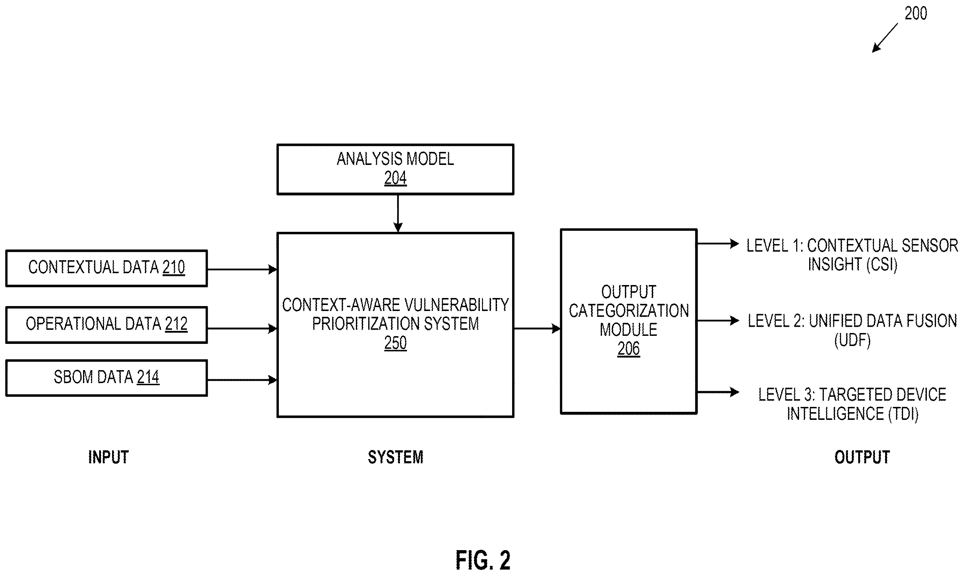

FIG. 2 illustrates a generalized context-aware vulnerability prioritization system according to various embodiments of the present disclosure. System 250 comprises context-aware vulnerability prioritization system 250, analysis model 204 and output categorization module 206 as central components for providing customized vulnerability insights.

In operation, context-aware vulnerability prioritization system 250 receives contextual data 210, operational data 212, and SBOM data 214 and uses analysis model 204 to perform a vulnerability assessment and generate a risk score. Based on the vulnerability assessment and risk scoring, the results are categorized into distinct output levels to facilitate a multilevel output approach that provides customized vulnerability prioritization. For example, to prioritized vulnerabilities according to urgency and unique operational context associated with each OT/IoT device, output levels may be categorized into three levels as follows: (1) Level 1: contextual sensor insight (CSI), which processes vulnerabilities using indirect environmental and network data, processing vulnerabilities even when direct sensor readings are unavailable; (2) Level 2: unified data fusion (UDF), which combines indirect and direct data for a comprehensive risk profile, for example, when contextual and operational data have been successfully received; and (3) Level 3: targeted device intelligence (TDI), which focuses on device-specific data to provide precise vulnerability prioritization for individual devices, for example, when only operational data is available.

Although this multilevel categorization typically includes three output levels, it is understood that the systems and methods for context-aware vulnerability prioritization described herein may employ any number of levels, providing flexibility in addressing various contextual needs.

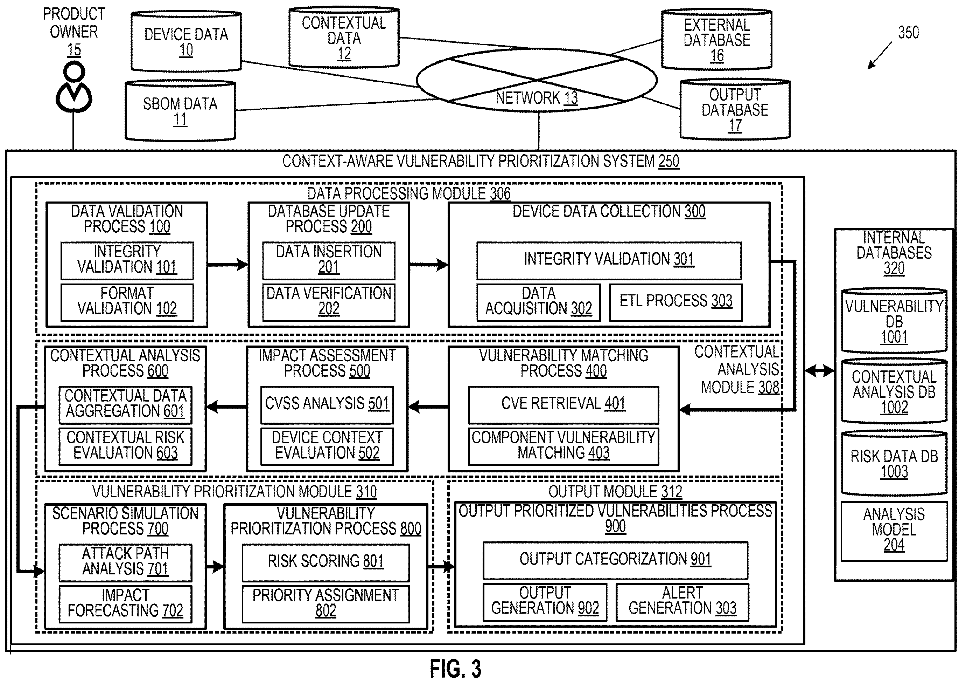

FIG. 3 illustrates is a more detailed context-aware vulnerability prioritization system according to various embodiments of the present disclosure. System 350 comprises context-aware vulnerability prioritization system 250, network 13, device data 10, SBOM data 11, contextual data 12, external database 16, and output database 17. As depicted, context-aware vulnerability prioritization system 250 may comprise data processing module 306, contextual analysis module 308, vulnerability prioritization module 310, output module 312, and internal databases 320, such as vulnerability database 1001, contextual analysis database 1002, and risk data database 1003. As depicted, internal databases 320 may be used to store analysis model 204.

In operation, data processing module 306 may perform data validation process 100, which may comprise integrity validation 101 and format validation 102; data update process 200, which may comprise data insertion 201 and data verification 202; data device data collection process 300, which may comprise integrity validation 301, data acquisition 302, and ETL process 303. The output of data processing module 306 may be provided to contextual analysis module 308 that performs vulnerability matching process 400, which may comprise CVE retrieval 401 and component vulnerability matching 403; impact assessment process 500, which may comprise common vulnerability scoring system (CVSS) analysis 501 and device connect evaluation 502; and contextual analysis process 600, which may contextual data aggregation 601 and contextual risk evaluation 603.

In embodiments, the output of contextual analysis module 308 may be provided to vulnerability prioritization module 310 that performs scenario simulation process 700, which may comprise attack path analysis 701 and impact forecasting 702; and vulnerability prioritization process 800, which may comprise risk scoring 801 and priority assignment 802. Subsequently, output module 312 may perform output-prioritized vulnerabilities process 900, which may comprise output categorization 901 to categorize output levels into the previously mentioned three levels, output generation 902, and alert generation 903.

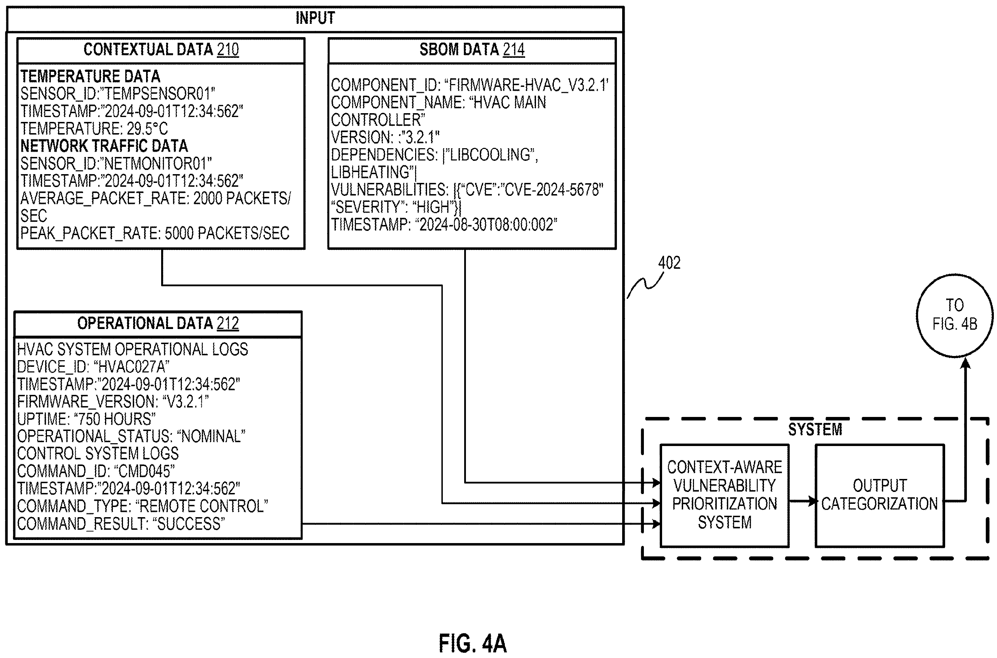

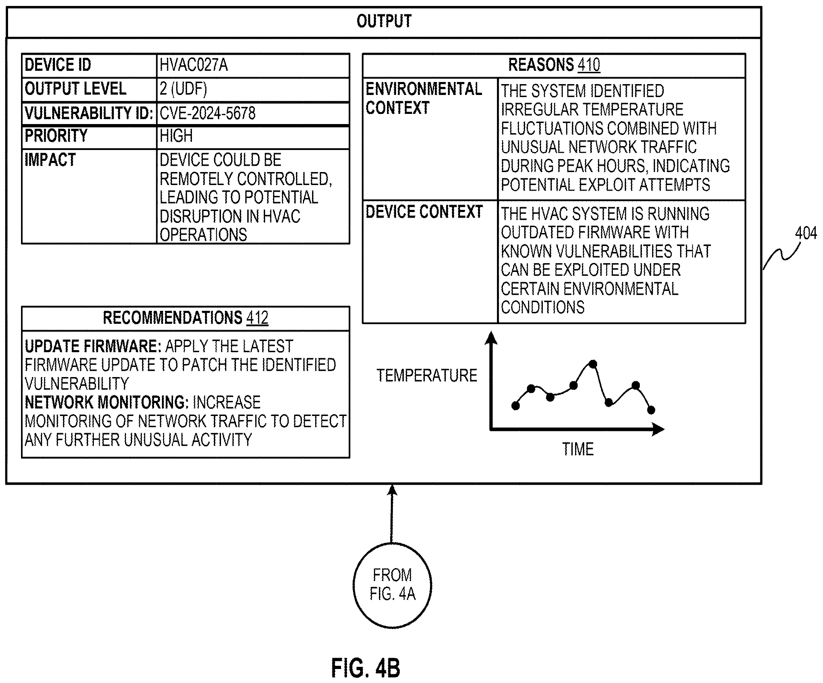

FIG. 4A and FIG. 4B illustrate exemplary inputs and outputs of the context-aware vulnerability prioritization system shown in FIG. 2, according to various embodiments of the present disclosure. As depicted in FIG. 4A, at input side 402, for an exemplary HVAC device equipped with a temperature sensor, contextual data 210 may comprise temperature-related data, such as a sensor ID, a timestamp, and a current temperature, and network traffic data, such as average and peak package rates for data transmission. Exemplary operational data 212 may comprise operational log data, such as device ID, firmware version, and operational status, and control system logs, such as command types and IDs. SBOM data 214 may comprise component names and IDs, dependencies, and vulnerabilities in those dependencies.

As depicted in FIG. 4B, an exemplary output 404 may comprise the output level, here level 2, i.e., indicating that both operational and contextual data have been received. As depicted, a priority of "high" has been assigned with an associated impact statement indicating that the device "could be remotely controlled leading to potential disruption in HVAC operations." Reasons 410 for the classification, from an operational context point of view, include "The system identified irregular temperature fluctuations combined with unusual network traffic during peak hours, indicating potential exploit attempts." Reasons, from the device-specific context perspective include that "The HVAC system is running outdated firmware with known vulnerabilities that can be exploited under certain environmental conditions." Finally, recommendations 412 are generated, which may comprise 1) "Update firmware: Apply the latest firmware update to patch the identified vulnerability," and 2) "Network monitoring: increased monitoring of network traffic to detect any further unusual activity." In addition, temperature data may be reproduced, e.g., to visualize anomalous fluctuations over time.

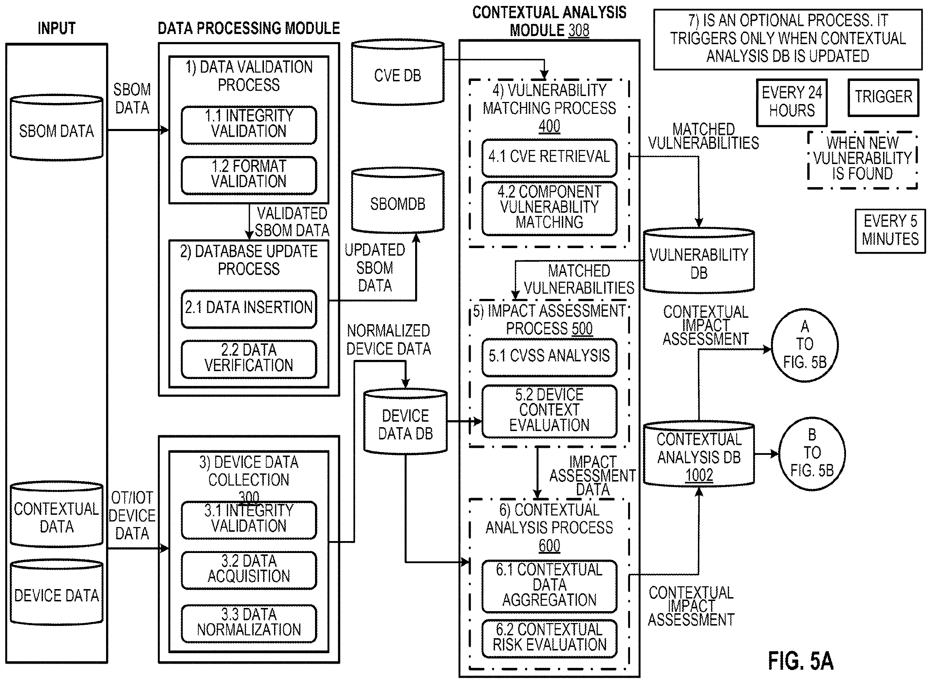

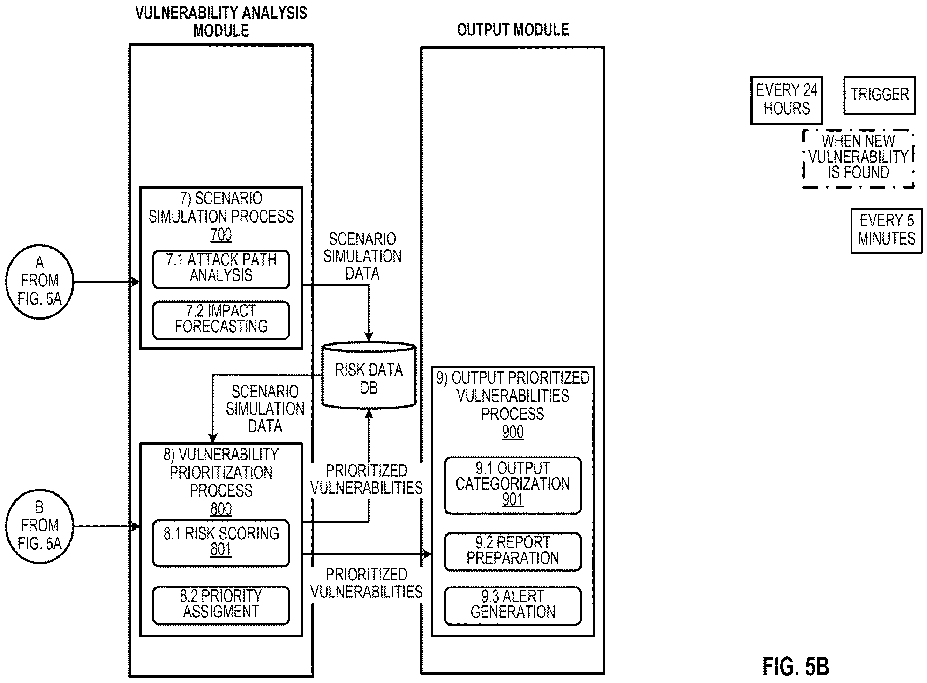

FIG. 5A and FIG. 5B illustrate an exemplary data flow in the context-aware vulnerability prioritization system shown in FIG. 3, according to various embodiments of the present disclosure. In embodiments, contextual analysis module 308 may use the vulnerability matching process to determine whether a piece of hardware has a known vulnerability, e.g., by matching component data with component data in a public database to identify the known vulnerability. In embodiments, to determine the severity of a found vulnerability, the impact assessment process may assess an impact by using a CVSS analysis and performing a device context evaluation to generate impact assessment data that is provided to contextual analysis module 308, which performs a risk evaluation in light of the impact assessment data. The result may be stored in contextual analysis database 1002. The scenario simulation process, which may be triggered in response to contextual analysis database 1002 being updated, uses the risk evaluation, e.g., to determine which path a potential attacker may use to reach a target destination to exploit the device. Further, the scenario simulation process may perform impact forecasting, e.g., based on trained models.

In embodiments, based on the vulnerability matching process 400, impact assessment process 500, contextual analysis process 600, and scenario simulation process 700, the vulnerability prioritization process 800 may then perform risk scoring 801 to generate a risk score and assign priorities to data based on that risk score. The resulting prioritized vulnerabilities may be stored in the risk data database and also communicated to the output model for further processing, such as output categorization 901, report preparation, or alert generation. It is understood that the various processes depicted in FIG. 5A and FIG. 5B may have differing timing. For example, vulnerability matching process 400, impact assessment process 500, or contextual analysis process 600 may be performed only after a new vulnerability is detected, whereas device data collection process 300 may occur on a time scale of every few minutes.

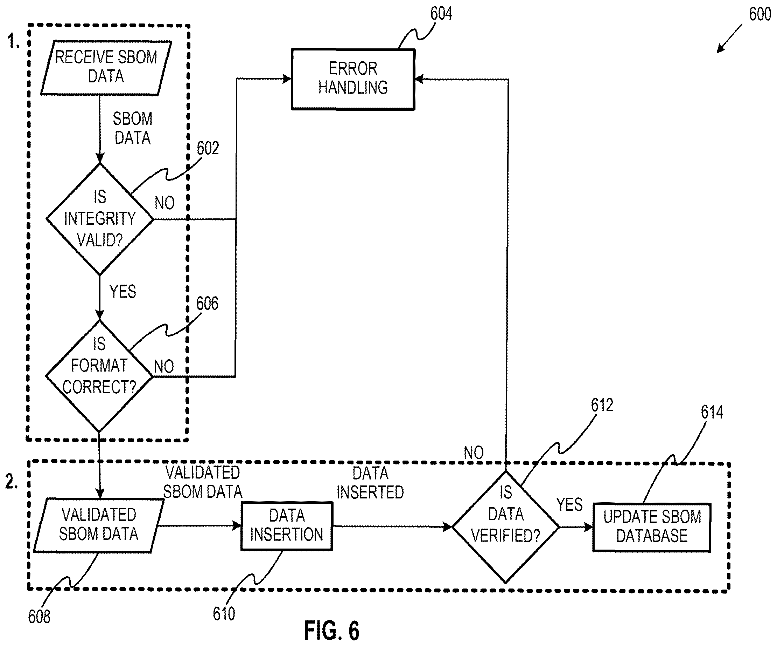

FIG. 6 is a flowchart illustrating the processing of SBOM data by the data processing module, according to various embodiments of the present disclosure. In embodiments, process 600 starts at step 602, when, in response to receiving SBOM data from an SBOM database, it is determined whether the SBOM data is valid. Checking the integrity of the data may be accomplished by any means known in the art. If it is found that the SBOM data is not valid, process 600 continues with error handling step 604. Otherwise, process 600 may further determine, at step 606, whether the format of the SBOM data is correct. If not, process 600, again, continues with error handling step 604. Otherwise, the SBOM data is validated, at step 608, and upon inserting contextual data from a number of sources, at step 610, which comprise environmental data and device data, the integrity of the SBOM data may be verified, at step 612, before updating the SBOM database, at step 614.

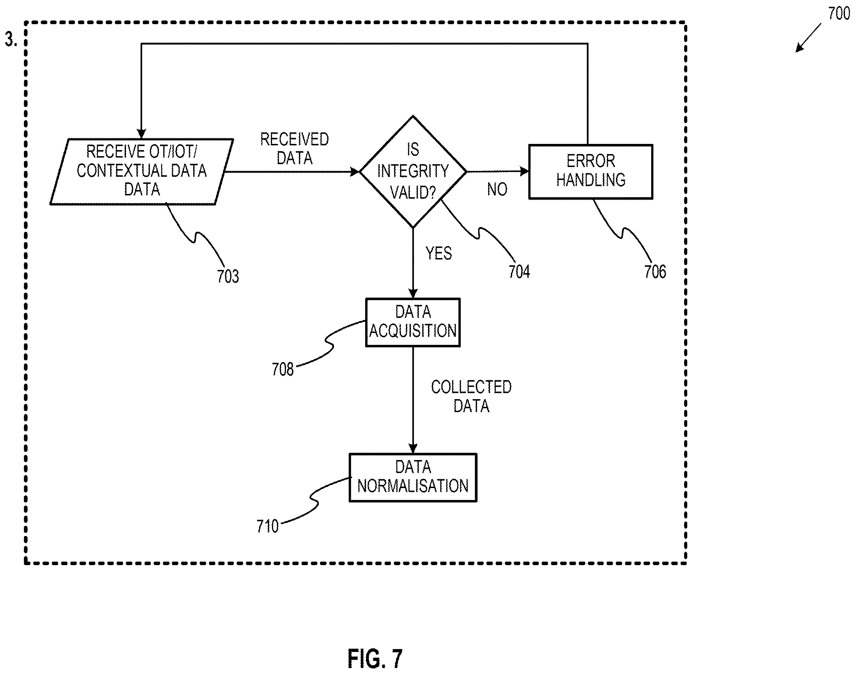

FIG. 7 is a flowchart illustrating a process for device data collection, according to various embodiments of the present disclosure. In embodiments, process 700 may start at step 703, when various types of data are received from OT devices, IoT devices, and other contextual data. At step 704, the system determines whether the received data's integrity is valid. If the data fails this validation, process 700 moves to error handling at step 706; otherwise, if integrity is valid, process 700 resumes with step 708, acquiring data for further processing and, at step 710, normalizing or standardizing the collected data. In embodiments, the gathered data may be transformed into a consistent format for uniform analysis. As with the data collection process, scenario simulation process 700 may be performed at predetermined intervals, e.g., every few minutes.

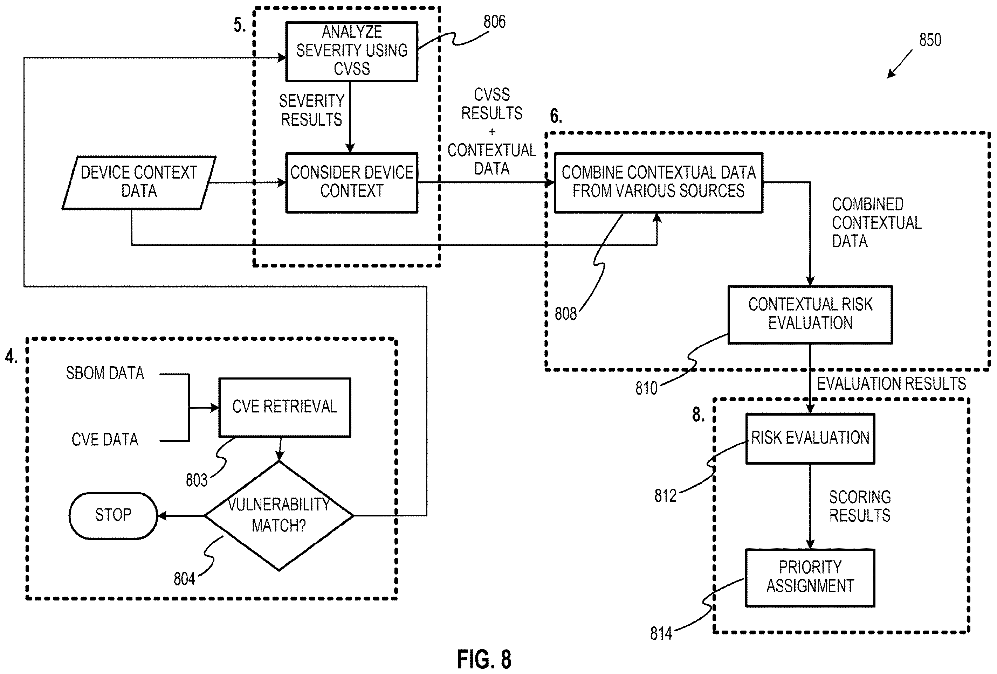

FIG. 8 is a flowchart illustrating a contextual analysis process, according to various embodiments of the present disclosure. In embodiments, contextual analysis process 850 may be performed in response to detecting a new vulnerability in the system. As depicted, process 850 starts at step 803, when SBOM data and newly found CVE data are used to retrieve existing CVE data from a CVE database. The new vulnerability may then be compared to known vulnerabilities to determine a vulnerability matching, at step 804. If a match is found, the severity of the vulnerability is analyzed, at step 806, e.g., by using CVSS results to generate a severity result. In embodiments, to enhance the accuracy of the severity information of a vulnerability, which may affect different users in differing scenarios, even when using the same software, the severity information may be combined, at step 808, with contextual data, such as device context data and environmental and operational factors from various sources, to perform a contextual risk evaluation, at step 810, e.g., to determine an overall risk associated with the combined data. At step 812, the results of the risk evaluation may be used to obtain risk scores that are indicative of the severity of the vulnerabilities, to which priorities may be assigned at step 814. The priority assignments may subsequently be used for immediate action or future planning.

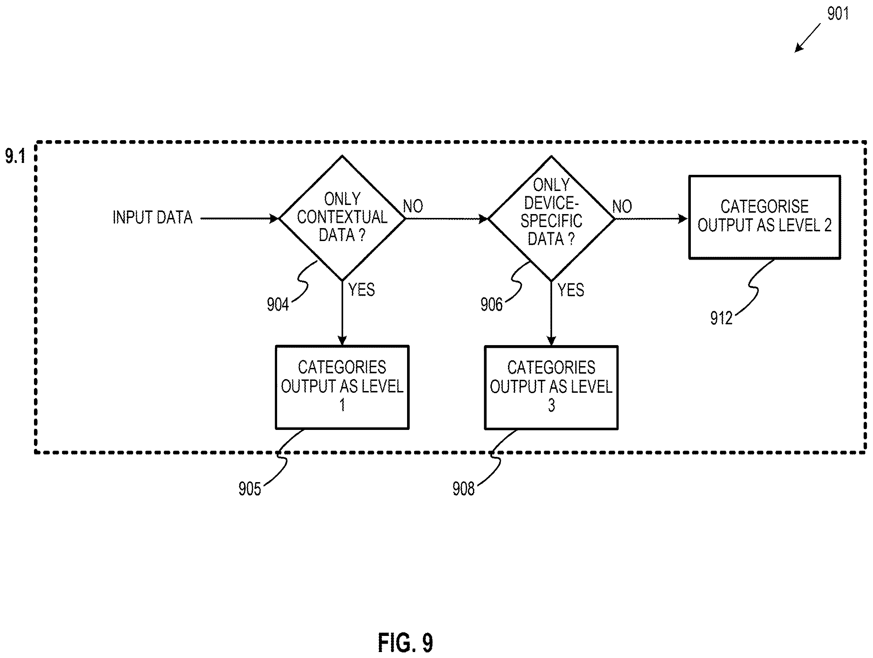

FIG. 9 is a flowchart illustrating a process for output categorization, according to various embodiments of the present disclosure. In the example in FIG. 9, output categorization process 901 starts at step 904, when, in response to receiving several types of input data, it is determined whether the data is purely contextual data (e.g., environmental or network-related). If so, at step 905, the data output is categorized as Level 1. If, at step 904, it is found that the data is not purely contextual data, it is determined, at step 906, whether the data is device-specific data. If so, at step 908, the data output is categorized as Level 3. If, at step 906, it is found that the data is not device-specific data, it is determined, at step 910, whether the data is a combination of device-specific and contextual data. If so, at step 912, the data output is categorized as Level 2. In embodiments, based on the categorization into distinct levels, process 901 may then generate an output such as a context-aware vulnerability alert that may be triggered in real-time, e.g., to initiate a threat response.

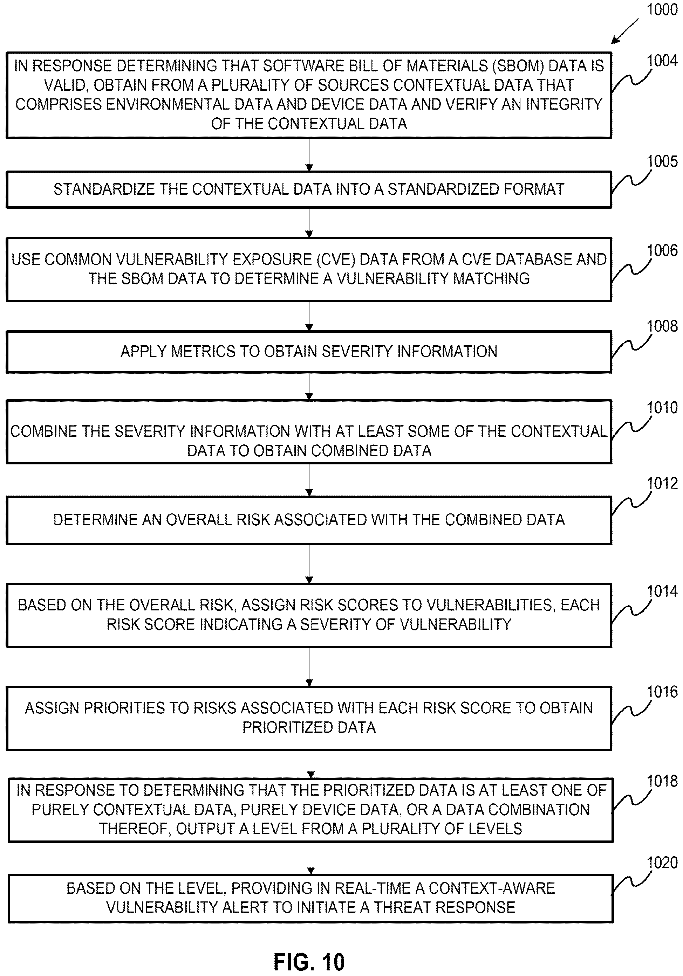

FIG. 10 is a flowchart illustrating an exemplary process for context-aware vulnerability prioritization using SBOM data and real-time contextual information from IoT or OT devices, e.g., operational data, which may be analyzed to determine at least one of a device configuration or an environmental factor.

In embodiments, process 1000 may start at step 1004, when, in response determining that SBOM data is valid, contextual data that comprises environmental data and device data is obtained from a number of sources and an integrity of the contextual data is verified. In embodiments, in response to the integrity of the contextual data not being met, an error handling process may be triggered, e.g., if a format of the SBOM data is incorrect.

At step 1005, the contextual data may be standardized to obtain data in a standardized format, such as MQTT, CoAP, OPC UA, or MODBUS. Contextual data may further be updated, e.g., in predetermined time intervals.

At step 1006, CVE data from a CVE database and the SBOM data may be used to determine a vulnerability matching.

At step 1008, one or more metrics, such as a CVSS, may be applied to obtain severity information.

At step 1010, the severity information may be combined with contextual data to obtain combined data.

At step 1012, an overall risk associated with the combined data is determined.

At step 1014, based on the overall risk, risk scores may be assigned to vulnerabilities, where each risk score indicates vulnerability severity.

At step 1016, priorities may be assigned to risks associated with each risk score to obtain prioritized data.

At step 1018, in response to determining that the prioritized data is purely contextual data, purely device data, or a data combination thereof, a level, which may comprise CSI, UDF, or TDI, is assigned and output.

Finally, at step 1020, based on the level, a context-aware vulnerability alert may be provided, e.g., in real-time to initiate a threat response.

One skilled in the art shall recognize that: (1) certain steps may optionally be performed; (2) steps may not be limited to the specific order set forth herein; (3) certain steps may be performed in different order; and (4) certain steps may be done concurrently or iteratively.

The systems and methods herein provide real-time, context-aware vulnerability prioritization by accurately assessing the impact of vulnerabilities based on device-specific data and environmental context, thereby reducing the risk of critical threats. They enable more efficient resource allocation by focusing on the most critical vulnerabilities, thus improving overall system security and reducing unnecessary remedial actions. The multi-level output model ensures that vulnerabilities are prioritized according to the nature and specificity of the input data, leading to more precise and actionable security insights for both generic and device-specific threats.

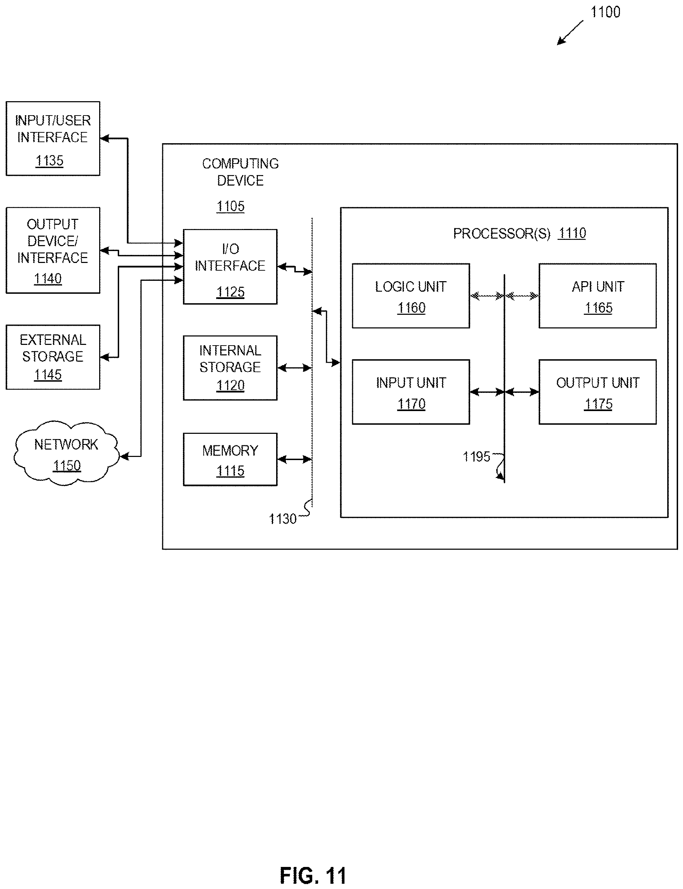

FIG. 11 illustrates an example computing environment suitable for use in some example implementations, according to various embodiments of the present disclosure. Computer device 1105 in computing environment 1100 can include one or more processing units, cores, or processors 1110, memory 1115 (e.g., RAM, ROM, and/or the like), internal storage 1120 (e.g., magnetic, optical, solid-state storage, and/or organic), and/or I/O interface 1125, any of which can be coupled on a communication mechanism or bus 1130 for communicating information or embedded in the computer device 1105. I/O interface 1125 is also configured to receive images from cameras or provide images to projectors or displays, depending on the desired implementation.

Computer device 1105 can be communicatively coupled to input/user interface 1135 and output device/interface 1140. Either one or both of input/user interface 1135 and output device/interface 1140 can be a wired or wireless interface and can be detachable. Input/user interface 1135 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 1140 may include a display, television, monitor, printer, speaker, braille, or the like. In some example implementations, input/user interface 1135 and output device/interface 1140 can be embedded with or physically coupled to the computer device 1105. In other example implementations, other computer devices may function as or provide the functions of input/user interface 1135 and output device/interface 1140 for a computer device 1105.

Examples of computer device 1105 may include highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1105 can be communicatively coupled (e.g., via I/O interface 1125) to external storage 1145 and network 1150 for communicating with any number of networked components, devices, and systems, including one or more computer devices of the same or different configurations. Computer device 1105 or any connected computer device can be functioning as, providing services of, or referred to as a server, client, thin server, general machine, special-purpose machine, or another label.

I/O interface 1125 can include wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 1100. Network 1150 can be any network or combination of networks (e.g., the Internet, local area network, wide area network, a telephonic network, a cellular network, a satellite network, and the like).

Computer device 1105 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 1105 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1110 can execute under any operating system (OS) (not shown), in a native or virtual environment. One or more applications can be deployed that include logic unit 1160, application programming interface (API) unit 1165, input unit 1170, output unit 1175, and inter-unit communication mechanism 1195 for the different units to communicate with each other, with the OS, and with other applications (not shown). The described units and elements can be varied in design, function, configuration, or implementation and are not limited to the descriptions provided. Processor(s) 1110 can be in the form of hardware processors such as central processing units (CPUs) or a combination of hardware and software units.

In some example implementations, when information or an execution instruction is received by API unit 1165, it may be communicated to one or more other units (e.g., logic unit 1160, input unit 1170, output unit 1175). In some instances, logic unit 1160 may be configured to control the information flow among the units and direct the services provided by API unit 1165, input unit 1170, and output unit 1175, in some example implementations described above. For example, the flow of one or more processes or implementations may be controlled by logic unit 1160 alone or in conjunction with API unit 1165. The input unit 1170 may be configured to obtain input for the calculations described in the example implementations, and the output unit 1175 may be configured to provide output based on the calculations described in example implementations.

Processor(s) 1110 can be configured to execute a method or computer instructions which can involve obtaining from a plurality of sources contextual data that comprises environmental data and device data and verifying an integrity of the contextual data, e.g., in response determining that SBOM data is valid, and standardizing the contextual data into a standardized format, as described, for example, with respect to FIG. 3 and FIG. 10.

Processor(s) 1110 can be configured to execute a method or computer instructions which can involve using CVE data from a CVE database and the SBOM data to determine a vulnerability matching, applying metrics to obtain severity information, combing the severity information with at least some of the contextual data to obtain combined data; determining an overall risk associated with the combined data; based on the overall risk, assigning risk scores to vulnerabilities, each risk score indicating a severity of vulnerability; assigning priorities to risks associated with each risk score to obtain prioritized data, as described, for example, with respect to FIG. 8 and FIG. 10.

Processor(s) 1110 can be configured to execute a method or computer instructions which can involve, in response to determining that the prioritized data is at least one of purely contextual data, purely device data, or a data combination thereof, outputting a level from a plurality of levels; and providing, based on the level and in real-time, a context-aware vulnerability alert, e.g., to initiate a threat response, , as described, for example, with respect to FIG. 3, FIG. 9, and FIG. 10.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities to achieve a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer-readable medium, such as a computer-readable storage medium or a computer-readable signal medium. A computer-readable storage medium may involve tangible mediums such as optical disks, magnetic disks, read-only memories, random access memories, solid-state devices, drives, or any other types of tangible or non-transitory media suitable for storing electronic information. A computer-readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope and spirit of the present application being indicated by the following claims.

## Claims

1. A method for context-aware vulnerability prioritization using Software Bill of Materials (SBOM) data and real-time contextual information from Internet of Things (IoT) or operational technology (OT) devices, the method comprising:
in response determining that SBOM data is valid, performing steps comprising:
obtaining from a plurality of sources contextual data that comprises environmental data and device data; and
verifying an integrity of the contextual data;
standardizing the contextual data into a standardized format;
using common vulnerability exposure (CVE) data from a CVE database and the SBOM data to determine a vulnerability matching;
applying metrics to obtain severity information;
combing the severity information with at least some of the contextual data to obtain combined data;
determining an overall risk associated with the combined data;
based on the overall risk, assigning risk scores to vulnerabilities, each risk score indicating a severity of vulnerability;
assigning priorities to risks associated with each risk score to obtain prioritized data;
in response to determining that the prioritized data is at least one of purely contextual data, purely device data, or a data combination thereof, outputting a level from a plurality of levels; and
based on the level, providing in real-time a context-aware vulnerability alert to initiate a threat response.

2. The method of claim 1, wherein one or more of the steps are performed iteratively.

3. The method of claim 1, wherein the metrics comprise a common vulnerability scoring system (CVSS) metric.

4. The method of claim 1, wherein the standardized format is at least one of MQTT, CoAP, OPC UA, or MODBUS.

5. The method of claim 1, wherein the device data comprises operational data from at least one of a set of IoT devices or a set of OT devices.

6. The method of claim 5, further comprising analyzing the operational data from IoT/OT devices to determine at least one of a device configuration or an environmental factor.

7. The method of claim 1, wherein the contextual data is updated in predetermined time intervals.

8. The method of claim 1, wherein the plurality of levels comprises Contextual Sensor Insight (CSI), Unified Data Fusion (UDF), or Targeted Device Intelligence (TDI).

9. The method of claim 1, wherein determining that SBOM data is valid comprises, in response to the integrity of the contextual data not being met, triggering an error handling process.

10. The method of claim 8, wherein the error handling is triggered in response to determining that a format of the SBOM data is incorrect.

11. The method of claim 1, further comprising using the SBOM data to update a SBOM database.

12. A non-transitory computer-readable medium for storing instructions for executing a process, the instructions comprising:
in response determining that Software Bill of Materials (SBOM) data is valid, performing steps comprising:
obtaining from a plurality of sources contextual data that comprises environmental data and device data; and
verifying an integrity of the contextual data,
standardizing the contextual data into a standardized format;
using common vulnerability exposure (CVE) data from a CVE database and the SBOM data to determine a vulnerability matching;
applying metrics to obtain severity information;
combing the severity information with at least some of the contextual data to obtain combined data;
determining an overall risk associated with the combined data;
based on the overall risk, assigning risk scores to vulnerabilities, each risk score indicating a severity of vulnerability;
assigning priorities to risks associated with each risk score to obtain prioritized data;
in response to determining that the prioritized data is at least one of purely contextual data, purely device data, or a data combination thereof, outputting a level from a plurality of levels; and
based on the level, providing in real-time a context-aware vulnerability alert to initiate a threat response.

13. The non-transitory computer-readable medium of claim 12, wherein the device data comprises operational data from at least one of a set of Internet of Things (IoT) devices or a set of operational technology (OT) devices.

14. The non-transitory computer-readable medium of claim 13, further comprising analyzing the operational data from IoT/OT devices to determine at least one of a device configuration or an environmental factor.

15. The non-transitory computer-readable medium of claim 12, wherein the contextual data is updated in predetermined time intervals.

16. The non-transitory computer-readable medium of claim 12, wherein determining that SBOM data is valid comprises, in response to the integrity of the contextual data not being met, triggering an error handling process.

17. An apparatus, comprising:
a processor, configured to perform steps comprising:
in response determining that Software Bill of Materials (SBOM) data is valid, obtaining from a plurality of sources contextual data that comprises environmental data and device data; and
verifying an integrity of the contextual data,
standardizing the contextual data into a standardized format;
using common vulnerability exposure (CVE) data from a CVE database and the SBOM data to determine a vulnerability matching;
applying metrics to obtain severity information;
combing the severity information with at least some of the contextual data to obtain combined data;
determining an overall risk associated with the combined data;
based on the overall risk, assigning risk scores to vulnerabilities, each risk score indicating a severity of vulnerability;
assigning priorities to risks associated with each risk score to obtain prioritized data;
in response to determining that the prioritized data is at least one of purely contextual data, purely device data, or a data combination thereof, outputting a level from a plurality of levels; and
based on the level, providing in real-time a context-aware vulnerability alert to initiate a threat response.

18. The apparatus of claim 17, wherein the device data comprises operational data from at least one of a set of Internet of Things (IoT) devices or a set of operational technology (OT) devices.

19. The apparatus of claim 18, wherein the steps further comprise analyzing the operational data from IoT/OT devices to determine at least one of a device configuration or an environmental factor.

20. The apparatus of claim 17, wherein the contextual data is updated in predetermined time intervals.

## Amended claims

### Amended claims in accordance with Rule 137(2) EPC.

1. A method (1000) for context-aware vulnerability prioritization using Software Bill of Materials, SBOM, data (214) and real-time contextual information from Internet of Things, IoT, or operational technology, OT, devices, the method (1000) comprising:
in response determining that SBOM data (214) is valid, performing steps comprising:
obtaining (1004) from a plurality of sources contextual data (210) that comprises environmental data and device data; and
verifying (1004) an integrity of the contextual data (210);
standardizing (1005) the contextual data (210) into a standardized format;
using (1006) common vulnerability exposure, CVE, data from a CVE database and the SBOM data (214) to determine a vulnerability matching;
applying (1008) metrics to obtain severity information;
combining (1010) the severity information with at least some of the contextual data (210) to obtain combined data;
determining (1012) an overall risk associated with the combined data;
based on the overall risk, assigning (1014) risk scores to vulnerabilities, each risk score indicating a severity of vulnerability;
assigning (1016) priorities to risks associated with each risk score to obtain prioritized data;
in response to determining that the prioritized data is at least one of purely contextual data (210), purely device data, or a data combination thereof, outputting (1018) a level from a plurality of levels; and
based on the level, providing (1020) in real-time a context-aware vulnerability alert to initiate a threat response.

2. The method (1000) of claim 1, wherein one or more of the steps are performed iteratively.

3. The method (1000) of claim 1, wherein the metrics comprise a common vulnerability scoring system, CVSS, metric.

4. The method (1000) of claim 1, wherein the standardized format is at least one of MQTT, CoAP, OPC UA, or MODBUS.

5. The method (1000) of claim 1, wherein the device data comprises operational data (212) from at least one of a set of IoT devices or a set of OT devices.

6. The method (1000) of claim 5, further comprising analyzing the operational data (212) from IoT/OT devices to determine at least one of a device configuration or an environmental factor.

7. The method (1000) of claim 1, wherein the contextual data (210) is updated in predetermined time intervals.

8. The method (1000) of claim 1, wherein the plurality of levels comprises Contextual Sensor Insight, CSI, Unified Data Fusion, UDF, or Targeted Device Intelligence, TDI.

9. The method (1000) of claim 1, wherein determining that SBOM data (214) is valid comprises, in response to the integrity of the contextual data (210) not being met, triggering an error handling process.

10. The method (1000) of claim 8, wherein the error handling is triggered in response to determining that a format of the SBOM data (214) is incorrect.

11. The method (1000) of claim 1, further comprising using the SBOM data (214) to update a SBOM database.

12. A non-transitory computer-readable medium for storing instructions for executing a process, the instructions comprising:
in response determining that Software Bill of Materials, SBOM, data (214) is valid, performing steps comprising:
obtaining from a plurality of sources contextual data (210) that comprises environmental data and device data; and
verifying an integrity of the contextual data (210),
standardizing the contextual data (210) into a standardized format;
using common vulnerability exposure, CVE, data from a CVE database and the SBOM data (214) to determine a vulnerability matching;
applying metrics to obtain severity information;
combining the severity information with at least some of the contextual data (210) to obtain combined data;
determining an overall risk associated with the combined data;
based on the overall risk, assigning risk scores to vulnerabilities, each risk score indicating a severity of vulnerability;
assigning priorities to risks associated with each risk score to obtain prioritized data;
in response to determining that the prioritized data is at least one of purely contextual data (210), purely device data, or a data combination thereof, outputting a level from a plurality of levels; and
based on the level, providing in real-time a context-aware vulnerability alert to initiate a threat response.

13. The non-transitory computer-readable medium of claim 12, wherein the device data comprises operational data (212) from at least one of a set of Internet of Things, IoT, devices or a set of operational technology, OT, devices.

14. The non-transitory computer-readable medium of claim 13, further comprising analyzing the operational data (212) from IoT/OT devices to determine at least one of a device configuration or an environmental factor.

15. The non-transitory computer-readable medium of claim 12, wherein the contextual data (210) is updated in predetermined time intervals.

16. The non-transitory computer-readable medium of claim 12, wherein determining that SBOM data (214) is valid comprises, in response to the integrity of the contextual data (210) not being met, triggering an error handling process.

17. An apparatus, comprising:
a processor, configured to perform steps comprising:
in response determining that Software Bill of Materials, SBOM, data (214) is valid, obtaining from a plurality of sources contextual data (210) that comprises environmental data and device data; and
verifying an integrity of the contextual data (210),
standardizing the contextual data (210) into a standardized format;
using common vulnerability exposure, CVE, data from a CVE database and the SBOM data (214) to determine a vulnerability matching;
applying metrics to obtain severity information;
combining the severity information with at least some of the contextual data (210) to obtain combined data;
determining an overall risk associated with the combined data;
based on the overall risk, assigning risk scores to vulnerabilities, each risk score indicating a severity of vulnerability;
assigning priorities to risks associated with each risk score to obtain prioritized data;
in response to determining that the prioritized data is at least one of purely contextual data (210), purely device data, or a data combination thereof, outputting a level from a plurality of levels; and
based on the level, providing in real-time a context-aware vulnerability alert to initiate a threat response.

18. The apparatus of claim 17, wherein the device data comprises operational data (212) from at least one of a set of Internet of Things, IoT, devices or a set of operational technology, OT, devices.

19. The apparatus of claim 18, wherein the steps further comprise analyzing the operational data (212) from IoT/OT devices to determine at least one of a device configuration or an environmental factor.

20. The apparatus of claim 17, wherein the contextual data (210) is updated in predetermined time intervals.
